(19) **Europäisches Patentamt**
**European Patent Office**
**Office européen des brevets**

(11) **EP 3 462 135 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(51) Int Cl.:
***G01D 4/00*** *(2006.01)*  ***G01D 21/00*** *(2006.01)*
***H04Q 9/00*** *(2006.01)*  ***H04L 1/00*** *(2006.01)*

(21) Anmeldenummer: **18000707.2**

(22) Anmeldetag: **30.08.2018**

(54) **VERFAHREN ZUM BETRIEB EINES KOMMUNIKATIONSSYSTEMS**

METHOD OF OPERATING A COMMUNICATION SYSTEM

PROCÉDÉ DE FONCTIONNEMENT D'UN SYSTÈME DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2017 DE 102017009082**
**10.03.2018 DE 102018001967**

(43) Veröffentlichungstag der Anmeldung:
**03.04.2019 Patentblatt 2019/14**

(73) Patentinhaber: **Diehl Metering Systems GmbH**
**90451 Nürnberg (DE)**

(72) Erfinder:
• **Petkov, Hristo**
**DE - 90425 Nürnberg (DE)**

• **Lautenbacher, Thomas**
**DE - 91058 Erlangen (DE)**
• **Kauppert, Thomas**
**DE - 90455 Nürnberg (DE)**
• **Gottschalk, Klaus**
**DE - 90610 Winkelhaid (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**DE-A1-102011 113 828  JP-A- 2014 116 681**
**US-A1- 2001 011 032  US-A1- 2011 241 423**

**Beschreibung**

Die vorliegende Erfindung betrifft ein Verfahren zum Betrieb eines Kommunikationssystems, gemäß dem Oberbegriff des Anspruchs 1 sowie ein Endgerät zur Bestimmung eines Parameters.

Technologischer Hintergrund

Intelligente Verbrauchszähler, auch Smart Meter genannt, sind in ein Versorgungsnetz eingebundene Verbrauchszähler, z. B. für Wärme bzw. Energie, Strom, Gas, Wasser, die dem jeweiligen Anschlussbenutzer den tatsächlichen Verbrauch anzeigen und in ein Kommunikationsnetz eingebunden sind. Intelligente Verbrauchszähler haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können Versorgungsnetze wesentlich besser ausgelastet werden.

Gattungsgemäße Verbrauchszähler sind üblicherweise jeweils Wohn-, Gewerbe- oder Industrieeinheiten zugeordnet. Die dort anfallenden Verbrauchsdaten können auf unterschiedlichste Weise ausgelesen werden, z. B. über eine Funkverbindung. Aufgrund dessen, dass derartige Verbrauchszähler teilweise über mehrere Jahre hinweg autark arbeiten müssen, d. h. den Verbrauch erfassen und diesen z. B. mittels Funkverbindung übertragen, werden besondere Anforderungen an die Energieversorgung des Verbrauchszählers gestellt. Als Energiespeicher wird hierbei meistens eine Batterie eingesetzt, die z. B. aufgrund der Eichung oder einer geforderten Schutzklasse des Verbrauchszählers, fest im Verbrauchszähler verbaut ist, z. B. zusammen mit der Elektronik des Verbrauchszählers mit Vergussmasse vergossen ist, sodass ein Austausch nicht ohne zusätzliche zeit- und kostenintensive Maßnahmen möglich ist. Die Betriebsdauer der Verbrauchszähler bemisst sich daher in der Regel an der Haltbarkeit des Energiespeichers, sodass vor allem die Weiterentwicklung des Energiemanagements im Fokus der Forschung und Entwicklung steht, um die Betriebsdauer von gattungsgemäßen Verbrauchszählern zu verlängern.

Druckschriftlicher Stand der Technik

Die DE 10 2011 113 828 A1 beschreibt ein Verfahren zur Ermittlung des Batteriezustands einer Batterie in einem batteriebetriebenen Verbrauchserfassungsgerät, wie z. B. ein Heizkostenverteiler, ein Wasserzähler oder ein Datensammler, welcher von einem Verbrauchszähler zugesandte Daten an eine zentrale Sammelstelle weiterleitet, wobei der Verbrauchszähler die Verbrauchsdaten per Funk in vorgegebenen Zeitabständen an den Datensammler sendet. Die Verbrauchserfassungsgeräte weisen hierbei einen zeitlich wechselnden, insbesondere gepulsten Stromverbrauch auf, wie er insbesondere bei einer Funkübertragung von Daten beim Senden und/oder Empfangen auftritt. Ferner können unterschiedliche Rechenleistungen eines in dem Gerät enthaltenen Mikroprozessors zu einem zeitlich wechselnden Stromverbrauch führen. Bei dem Verfahren zur Ermittlung des Batterieladezustands der Batterie wird die Spannung der Batterie gemessen, wobei daraus ein Kriterium für den Batterieladezustand abgeleitet wird. Daraus ergibt sich der Nachteil, dass die Batteriespannung dauernd oder zeitlich getastet gemessen werden muss und somit zusätzliche und aufwendige Schaltungsanordnungen vorzusehen sind. Zudem erfolgt die Datenübertragung über Funk ohne zusätzliche Sicherungsmaßnahmen, wodurch sich Probleme hinsichtlich der Datenübertragungssicherheit ergeben können.

Die JP 2014-116681 A beschreibt ein batteriebetriebenes Kommunikationsgerät mit einer Kommunikationseinrichtung zum Senden von Daten, einem Mikroprozessor und einer Stromversorgung mit einer Batterie. Der Mikroprozessor ist dazu eingerichtet, die Daten vor dem Senden zu kodieren, wobei die Kodierungsrate abhängig vom Ladezustand der Batterie gesteuert wird.

Die US 2001/0011032 A1 zeigt ebenfalls ein mobiles Kommunikationsgerät, welches eine Kommunikationseinrichtung zum Senden und Empfangen von Daten, einen Mikroprozessor und eine Batterie aufweist. Der Mikroprozessor ist dazu eingerichtet, die zu sendenden Daten abhängig vom Ladezustand der Batterie entweder direkt zu senden oder bei zu geringer Batteriespannung in einem besonderen Speicher zwischenzuspeichern um sie später zu senden.

Aufgabe der vorliegenden Erfindung

Der vorliegenden Erfindung liegt die Aufgabe zugrunde, ein Verfahren zum Betrieb eines Kommunikationssystems zur Verfügung zu stellen, durch das die Sicherheit der Übertragung der Daten innerhalb des Kommunikationssystems verbessert und der Energiebedarf verringert wird.

<u>Lösung der Aufgabe</u>

Die vorstehende Aufgabe wird durch die gesamte Lehre des Anspruchs 1 sowie des nebengeordneten Anspruchs gelöst. Zweckmäßige Ausgestaltungen sind in den Unteransprüchen beansprucht.

Bei dem Verfahren zum Betrieb eines Kommunikationssystems, werden Daten von einem Kommunikationsteilnehmer gesendet und/oder empfangen. Insbesondere kann es sich bei dem Kommunikationssystem um ein Kommunikationssystem zur Sensor- und/oder Verbrauchsdatenübertragung handeln, bei dem die Sensor- und/oder Verbrauchsdaten sowie Betriebsdaten zwischen den Kommunikationsteilnehmern übertragen werden. Bei den Kommunikationsteilnehmern handelt es sich vorzugsweise um Endgeräte, welche jeweils beispielsweise als Sensor, Verbrauchszähler, Datensammler oder dergleichen ausgestaltet sind. Der Kommunikationsteilnehmer bzw. das Endgerät umfasst eine Kommunikationseinrichtung zum Senden und/oder Empfangen der Daten, eine Steuer- und Auswerteinheit, einen Mikroprozessor bzw. Mikrokontroller und eine Energieversorgung (z. B. eine Batterie oder ein Akkumulator). Die Energieversorgung versorgt hierbei die Steuer- und Auswerteinheit sowie den Mikroprozessor und/oder die Kommunikationseinrichtung für deren Betrieb mit Energie. Ferner weist die Energieversorgung eine elektrische Größe auf, deren Wert sich im Zuge der Versorgung des Mikroprozessors und/oder der Kommunikationseinrichtung mit Energie von einem Ausgangswert aus ändert, vorzugsweise im Wesentlichen proportional zur Versorgung. Der Mikroprozessor wird dabei derart betrieben, dass dieser die Daten vor dem Senden kodiert und/oder nach dem Empfang dekodiert, wobei das Kodieren bzw. Dekodieren über einen Rechenzyklus erfolgt. Unter "Rechenzyklus" ist z. B. ein Rechenvorgang des Mikroprozessors zu verstehen, welcher die Bearbeitung einer vollständigen Kodier- bzw. Dekodieraufgabe umfasst.

Erfindungsgemäß wird bei einer Änderung der elektrischen Größe, z. B. einem abrupten Abfallen, während des Rechenzyklus der Rechenzyklus, vorzugsweise an beliebiger Stelle, unterbrochen und nach zumindest teilweiser Regeneration der elektrischen Größe bzw. der Energieversorgung wieder fortgesetzt. Hierbei erfolgt das Kodieren und/oder Dekodieren während des Rechenzyklus getrennt in einzelnen Kodier- (bzw. Dekodier-) phasen, in denen sich der Wert der elektrischen Größe ändert, z. B. indem der Wert der elektrischen Größe sinkt oder steigt. Zwischen den und/oder innerhalb der Kodierphasen sind Regenerationsphasen zur zumindest teilweisen Regeneration der elektrischen Größe vorgesehen. Die Dauer einer Regenerationsphase ist hierbei derart bemessen, dass sich der Wert der elektrischen Größe während der Regenerationsphase zum Ausgangswert hin ändert und/oder diesen erreicht. Daraus resultiert der Vorteil, dass z. B. ein kritischer Wert der elektrischen Größe nicht über- oder unterschritten wird. Dadurch kann z. B. verhindert werden, dass der Spannungsabfall der Energieversorgung bei einsetzender Energieentnahme, durch das Arbeiten des Mikroprozessors beim Dekodieren, nicht auf einen kritischen Wert sinkt. Ferner wird die Energieversorgung bzw. der Energiespeicher geschont, z. B. indem die Passivierungsschicht der Batterie nicht durch einen zu großen Spannungsabfall in Mitleidenschaft gezogen wird. Die Haltbarkeit der Energieversorgung und damit des gesamten Gerätes wird dadurch in besonderem Maße verbessert. Zudem können durch dieses Lastenmanagement kostengünstigere Energiespeicher eingesetzt werden, wodurch sich die Herstellungskosten reduzieren lassen. Überraschenderweise hat sich gezeigt, dass die Energieversorgung hierbei derart gesteuert werden kann, dass sie konstanter arbeitet. Dadurch können z. B. im Bereich der Durchflussmengenbestimmung bzw. im Messbereich genauere Messergebnisse erzielt werden, da z. B. die für die Messtechnik benötigte Sensorik in der Regel eine geringere Messabweichung und somit eine höhere Messgenauigkeit aufweist, wenn diese an eine konstant bleibende Spannungsversorgung angeschlossen ist. In einfacher Weise kann das erfindungsgemäße Verfahren in bestehenden Geräten als reine Softwarelösung, Firmwareupdate oder als funktionelle Baugruppe implementiert werden.

Die Kodierphasen des Rechenzyklus können jeweils mindestens zwei, vorzugsweise mehrere, Teilkodierphasen umfassen, d. h. die Kodierung bzw. Dekodierung einer Kodierphase kann Stück für Stück durchgeführt werden, wobei die kodierten bzw. dekodierten Teilstücke anschließend zusammengesetzt werden, sodass sich das Ergebnis zu dem einer ununterbrochenen Kodierphase nicht unterscheidet. Ferner können zwischen den verschiedenen Teilstücken bzw. Teilkodierphasen jeweils Regenerationsphasen vorgesehen sein.

Zweckmäßigerweise kann ein Schwellenwert der elektrischen Größe festgelegt werden, wobei eine Zeitdauer t anhand des Schwellenwertes abgeleitet wird und der Wechsel zwischen der Kodierphase bzw. Teilkodierphase und der Regenerationsphase über ein Timersignal gesteuert wird. Das Timersignal kann bereits im Vorfeld festgelegt werden, sodass auch keine kontinuierliche Messung der elektrischen Größe vorgesehen ist bzw. erfolgt. Der Timer wird üblicherweise von einem Niedrigfrequenz-Oszillator gesteuert bzw. betrieben, beispielsweise bei 32768 Hz.

Vorzugsweise ist für den Mikroprozessor ein Stand-by-Betrieb vorgesehen, wobei der Mikroprozessor oder auch nur funktionelle Bereiche des Mikroprozessors während der Regenerationsphase in den Stand-by- Betrieb versetzt wird bzw. werden. Somit kann eine zeitweise Abschaltung des Mikroprozessors oder von funktionellen Bereichen des Mikroprozessors vorgenommen werden, wenn deren Betrieb nicht benötigt wird. Dadurch kann noch zusätzlich Energie eingespart werden.

Zweckmäßigerweise kann es sich bei dem Kodieren und/oder Dekodieren um eine Kanalkodierung und/oder Kanaldekodierung, eine Quellkodierung und/oder Quelldekodierung, eine Verschlüsselung und/oder Entschlüsselung und/oder eine Telegrammkodierung und/oder Telegrammdekodierung handeln. Im Rahmen der Erfindung sind ferner sämtliche aus dem Stand der Technik bekannte Kodier- bzw. Dekodierverfahren umfasst. Unter Kodierung/Dekodierung versteht man auch die Abarbeitung der höheren Schichten bis die Nachricht vollständig interpretierbar ist. Ausdrücklich umfasst das Dekodieren auch das Zurverfügungstellen der Nachrichten bzw. Daten für die höheren Schichten nach dem ISO O-SI-Schichtmodell (Open Systems Interconnection Model).

Vorzugsweise handelt es sich bei der elektrischen Größe der Energieversorgung um den Lade- und/oder Spannungszustand der Energieversorgung. Zur Bestimmung des Lade- und/oder Spannungszustandes oder als elektrische Größe selbst kann die Spannung, die Ladung, die Stromstärke, der Widerstand, die Leistung, die Arbeit, die Kapazität, die Frequenz, die Periodendauer, die Induktivität, die Stromdichte oder dergleichen herangezogen werden. Beispielsweise kann ein Energiespeicher, insbesondere eine Batterie, als Teil der Energieversorgung vorgesehen sein, wobei es sich bei der elektrischen Größe der Energieversorgung um den Lade- und/oder Spannungszustand des Energiespeichers handelt.

Alternativ oder zusätzlich kann auch ein Energiepuffer, insbesondere ein Kondensator, als Teil der Energieversorgung vorgesehen sein. Bei der elektrischen Größe der Energieversorgung kann es sich somit auch um den Lade- und/oder Spannungszustand des Energiepuffers handeln.

Ferner kann ein Schwellenwert der elektrischen Größe festgelegt werden, wobei sich der Wert der elektrischen Größe während der Kodierphase vom Ausgangswert zum Schwellenwert hin ändert, d. h. sich diesem Schwellenwert annähert. Bei dem Schwellenwert handelt es sich z. B. um einen Spannungswert, auf welchen die Spannung der Energieversorgung während des Dekodierens abfallen könnte ohne einen negativen Einfluss auf die Teilkomponenten, wie z. B. die Sensorik bzw. Messtechnik, zu haben.

Zweckmäßigerweise kann die Dauer der Kodierphase hierbei derart bemessen werden, dass der Wert der elektrischen Größe den Schwellenwert während der Kodierphase nicht erreicht oder unterschreitet. Die Haltbarkeit der Energieversorgung wird dadurch erheblich verbessert. Zudem wird ein negativer Einfluss auf Teilkomponenten wie Sensorik bzw. Messtechnik verhindert.

Besonders zweckmäßig ist es, wenn die Kodier- sowie Regenerationsphasen periodisch im Wechsel angeordnet sind. Dadurch wird es z. B. ermöglicht, den Spannungsbetrag der Energieversorgung während der Kodierphase bis auf einen bestimmten Wert abfallen zu lassen und diesen anschließend während der Regenerationsphase wieder ansteigen zu lassen, d. h. regenerieren zu lassen, sodass jeweils nur eine geringe, für die Energieversorgung schonende Spannungsabnahme erfolgt. Die Haltbarkeit der Energieversorgung wird dadurch noch zusätzlich verbessert.

Vorzugsweise werden die Daten, z. B. die Verbrauchs- und/oder Betriebsdaten, in Form von Datenpaketen gesendet und empfangen.

Zweckmäßigerweise kann der Mikroprozessor dazu vorgesehen sein, neben dem Kodieren bzw. Dekodieren mehrere Aufgaben zu bearbeiten, wie z. B. die Verarbeitung plötzlich auftretender Ereignisse, die Steuerung der Sensorik oder Verarbeitungsprozeduren der ermittelten Messwerte und Parameter.

Ferner können die Daten eine Prioritätsinformation enthalten, welche durch den Empfänger lesbar ist. In praktischer Weise erfolgt die Festlegung der Dauer der Kodierphasen und/oder der Regenerationsphasen anhand dieser Prioritätsinformation. Beispielsweise kann diese Prioritätsinformation am Anfang und/oder Ende der Datenpakete mitübertragen werden. Der Mikroprozessor kann anschließend entscheiden, ob die Daten möglichst schnell oder möglichst energiesparend dekodiert werden sollen, d. h. sofort und fortlaufend oder stückweise zu bestimmten Zeiten mit geringem Energiebedarf. Dabei haben die Daten mit einer höheren Priorität kürzere Regenerationsphasen, um schneller dekodiert zu werden. Die Energieversorgung kann dadurch noch effizienter belastet werden, wodurch sich z. B. die Dekodierungsgeschwindigkeit und/oder die Lebensdauer noch zusätzlich steigern lässt. Zudem können auch den jeweiligen Aufgaben Prioritäten zugewiesen werden, sodass z. B. ein abrupt auftretendes Ereignis eine bestimmte Priorität zur Bearbeitung zugewiesen bekommt.

Vorzugsweise wird anhand der Prioritätsinformation eine Abarbeitungsreihenfolge der anstehenden Aufgaben des Mikroprozessors abgeleitet, wobei Aufgaben mit höherer Priorität (z. B. die Sensormessung) sofort oder zumindest vorrangig vor Aufgaben mit niedrigerer Priorität abgearbeitet werden. Die Aufgaben mit niedrigerer Priorität, wie z. B. in diesem Falle die Kodierung bzw. Dekodierung, werden dabei in einem Speicher, z. B. im Datenspeicher des Endgerätes, hinterlegt und bei der nächsten aktiven Phase bzw. Kodierphase abgearbeitet. Die Kodierphase verschiebt sich dabei zeitlich um einen Wert, der vorzugsweise aus dem Produkt der Bearbeitungszeit für die Aufgabe mit höherer Priorität und des dazu benötigten Stroms berechnet wird.

Zweckmäßigerweise kann der Mikroprozessor, wenn er z. B. eine andere Aufgabe ohne Echtzeitanforderung abarbeitet, welche jedoch Priorität vor der Kodierung bzw. Dekodierung hat und nicht mit der Kodierung bzw. Dekodierung zusammenhängt, diese Aufgabe zeitlich verschieben, um zu gewährleisten, dass keine Störung oder Unterbrechung im Rhythmus der Kodierphasen bzw. der Kodierung bzw. Dekodierung auftritt.

Ferner kann z. B. für eine parallel zur Kodier- bzw. Dekodieraufgabe durchgeführte Aufgabe, insbesondere eine Aufgabe mit höherer Priorität, ein Bedarfswert oder der elektrischen Größe bestimmt werden, welcher der Veränderung der elektrischen Größe entspricht, die durch die Bearbeitung der Aufgabe auftritt. Beispielsweise kann die Spannung an der Energieversorgung während der Aufgabe der Sensorsteuerung berechnet werden, wobei der Spannungsabfall, der im Zuge der Sensorsteuerung an der Energieversorgung entsteht, den für die Aufgabe bestimmten Verbrauchswert darstellt. Ferner kann z. B. über den Timer die Bearbeitungsdauer der Aufgabe ermittelt werden, indem die Zeitpunkte bestimmt werden, wann der Mikroprozessor mit der Bearbeitung der Aufgabe begonnen und wann er diese abgeschlossen hat (Zeitbedarfswert). Der Verbrauchswert der elektrischen Größe sowie der Zeitbedarfswert können anschließend in einem Speicher hinterlegt werden und zur Berechnung der elektrischen Größe, wie z. B. der Spannung der Energieversorgung in Hinblick auf deren Veränderung im Zuge der Aufgabenbearbeitung, herangezogen werden. Dadurch kann die zur Regeneration benötigte Dauer der Regenerationsphasen ermittelt werden. Daraus resultiert der Vorteil, dass die Bearbeitungszeiten mit den jeweils anfallenden zu bearbeitenden Aufgaben in einfacher Weise abgestimmt werden können. Der Energiebedarf wird dadurch noch zusätzlich verringert.

Vorzugsweise umfasst der Kommunikationsteilnehmer ein Mittel zur Verbrauchsdatenerfassung. Gemäß einer bevorzugten Ausgestaltungsvariante handelt es sich bei dem Kommunikationsteilnehmer um ein Verbrauchsdatenerfassungsgerät bzw. einen Verbrauchszähler, wie z. B. einen Wasser-, Strom-, Gas- oder Wärmemengenzähler. Ferner kann es sich bei dem Kommunikationsteilnehmer auch um einen Datensammler bzw. einen Datenkonzentrator handeln, welcher z. B. die Daten mehrerer Verbrauchszähler über Funk empfängt und sammelt, sodass er diese an eine übergeordnete Einrichtung, wie z. B. die Schaltzentrale des Versorgers, zu festlegbaren Zeitpunkten weitersenden kann. Ausdrücklich als Endgerät umfasst sind jedoch auch andere Sensoren, wie z. B. Füllstandsensoren, die den Füllstand von Waren und/oder Lebensmitteln erfassen, z. B. in Regalen, Kühlschränken oder dergleichen, oder von Abfall in Containern oder Mülltonnen.

Gemäß einer besonderen Ausgestaltung der Erfindung kann eine Messeinrichtung zur Bestimmung des Wertes der elektrischen Größe vorgesehen sein. Hierbei kann es sich z. B. um einen Spannungsmesser handeln, welcher vorzugsweise an die Energieversorgung angeschlossen ist und dessen Messdaten einer übergeordneten Steuer- Auswerteeinheit oder dem Mikroprozessor zugänglich sind. Dadurch kann z. B. auch die verbleibende Restbetriebsdauer der Energieversorgung ermittelt werden, die dann z. B. dem Anwender in praktischer Weise angezeigt werden kann, z. B. durch einen optischen oder akustischen Alarm.

Zweckmäßigerweise kann das Senden und/oder Empfangen der Daten im Schmalband-Bereich erfolgen. Gemäß einer bevorzugten Ausgestaltung ist die Empfangsbandbreite der jeweiligen Messeinheit kleiner 25 kHz, vorzugsweise kleiner 20 kHz, vorzugsweise kleiner 5 kHz, vorzugsweise kleiner 3 kHz, besonders vorzugsweise kleiner 2 kHz. Die Bestimmung der Bandbreite kann beispielsweise gemäß der Norm ETSI EN 300 220-1 V3.1.1 (Stand 02/2017) erfolgen.

Ferner kann die Gesamtverarbeitung der Kodierphase länger als 20 msec, vorzugsweise länger als 50 msec, besonders vorzugsweise länger als 100 msec dauern.

Gemäß einer bevorzugten Ausgestaltung kann die Dauer der einzelnen Kodierphasen unterschiedlich lang sein und/oder die Kodierphasen können unterschiedliche Empfängeralgorithmen, wie z. B. Synchronisation, Demodulation, Dekodierung oder dergleichen, umfassen. Dadurch kann der Mikrokontroller z. B. seinen Arbeits- bzw. RAM (Random-Access Memory)-Speicher insbesondere zeitweise bzw. wahlweise abschalten. Die Energieeinsparung wird dadurch noch zusätzlich erhöht.

Nebengeordnet beansprucht die vorliegende Erfindung ein Endgerät zur Bestimmung eines vorzugsweise chemischen oder physikalischen Parameters, wie z. B. Wärmemenge, Temperatur, Feuchtigkeit, Druck, Schallfeldgrößen, Durchflussmenge, Volumen, Helligkeit, Beschleunigung, Spannung, Stromstärke, pH-Wert, Ionenstärke, elektrochemisches Potential), Füllstand (z. B. Füllstand von Flüssigkeiten oder Feststoffen), stoffliche Beschaffenheit bzw. Zusammensetzung und/oder dergleichen. Das Endgerät umfasst hierbei ein Mittel zur Parameterbestimmung (z. B. Sensoranordnung bzw. Sensorik) und Datenerzeugung (Parameterdaten), eine Kommunikationseinrichtung zum Senden (z. B. Verbrauchsdaten, Messdaten oder dergleichen) und/oder Empfangen (z. B. Steuerdaten, Betriebsdaten oder dergleichen) der Daten, einen Mikroprozessor sowie eine Energieversorgung. Die Energieversorgung ist z. B. dazu hergerichtet, die Mittel zur Parameterbestimmung, den Mikroprozessor und/oder die Kommunikationseinrichtung für deren Betrieb mit Energie zu versorgen. Ferner weist die Energieversorgung eine elektrische Größe auf, deren Wert sich im Zuge der Versorgung ändert, z. B. ab- oder zunimmt. Der Mikroprozessor dient unter anderem dazu, die Daten vor dem Senden zu kodieren und/oder nach dem Empfang zu dekodieren, und ist derart betreibbar, dass das Kodieren und/oder Dekodieren phasenweise in Kodierphasen erfolgt, in denen sich der Wert der elektrischen Größe von einem Ausgangswert aus ändert. Zwischen den Kodierphasen sind hierbei Regenerationsphasen zur zumindest teilweisen Regeneration der elektrischen Größe vorgesehen, in denen z. B. keine Kodierung und/oder Dekodierung erfolgt. Die Dauer der Regenerationsphasen ist dabei derart bemessen, dass sich der Wert der elektrischen Größe während der Regenerationsphase zum Ausgangswert hin ändert und/oder diesen erreicht, z. B. das der Spannungswert der Energieversorgung wieder auf das Niveau des Spannungswertes zum Beginn des Kodiervorgangs ansteigt, d. h. auf den Wert des Ausgangswertes ansteigt.

Vorzugsweise umfasst die Energieversorgung einen Energiespeicher, insbesondere eine Batterie, einen Akkumulator und/oder einen Energiepuffer, wie z. B. einen Kondensator oder Pufferkondensator. Ausdrücklich umfasst sind jedoch jegliche aus dem Stand der Technik bekannte, gattungsgemäße Energiespeicher.

Gemäß einer bevorzugten Ausgestaltungsvariante kann es sich bei dem Endgerät um einen Verbrauchszähler zur Bestimmung des Verbrauchs an einem Versorgungsmedium handeln, welcher als Parameter den Verbrauch bestimmt und diesen in Form von Verbrauchsdaten über das Kommunikationssystem senden und/oder empfangen kann. Beispielsweise kann als Verbrauchszähler ein Fluidzähler, wie z. B. ein Wasser-, Gas- oder Wärmemengenzähler vorgesehen sein.

Der Verbrauchszähler umfasst als Mittel zur Parameterbestimmung in der Regel ein Mittel zur Verbrauchsdatenerfassung bzw. Verbrauchsdatenbestimmung. Beispielsweise kann es sich dabei um eine Ultraschallwandleranordnung zur Durchflussmengenbestimmung eines Fluids handeln. Die Verbrauchsdatenerfassung erfolgt hierbei vorzugsweise anhand einer Laufzeitdifferenzmessung. Zweckmäßigerweise kann die Zeitdauer bis zum Erreichen des Schwellenwertes während der Energieversorgung z. B. anhand einer zusätzlichen Messeinrichtung bestimmt werden, vorzugsweise wird die Zeitdauer hierbei geschätzt, gemessen und/oder berechnet.

Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:

Fig. 1      eine vereinfachte, schematische Darstellung einer Ausgestaltung eines Kommunikationssystems, das mit dem erfindungsgemäßen Verfahren betrieben wird;

Fig. 2      eine stark vereinfachte schematische Darstellung eines erfindungsgemäßen Verbrauchszählers;

Fig. 3a     eine stark vereinfachte Darstellung der Spannungskurve SE des erfindungsgemäßen Verbrauchszählers;

Fig. 3b     eine stark vereinfachte Darstellung der Spannungskurve SM des erfindungsgemäßen Verbrauchszählers;

Fig. 4a     eine stark vereinfachte Darstellung der Spannungskurve SE des erfindungsgemäßen Verbrauchszählers mit Kondensator;

Fig. 4b     eine stark vereinfachte Darstellung der Spannungskurve SM des erfindungsgemäßen Verbrauchszählers mit Kondensator;

Fig. 5      eine stark vereinfachte Darstellung einer Ausgestaltung einer Schaltungsanordnung zur Energieversorgung des Mikroprozessors;

Fig. 6      eine stark vereinfachte Darstellung einer Ausgestaltung eines Rechenvorgangs des Mikroprozessors;

Fig. 7a     eine stark vereinfachte Darstellung einer weiteren Ausgestaltung eines Rechenvorgangs des Mikroprozessors;

Fig. 7b     eine stark vereinfachte Darstellung einer weiteren Ausgestaltung eines Rechenvorgangs des Mikroprozessors;

Fig. 8      eine stark vereinfachte Darstellung von aufeinanderfolgenden Kodierphasen, sowie

Fig. 9      eine stark vereinfachte Darstellung von aufeinanderfolgenden Kodierphasen mit zwischengeschaltetem Ereignis.

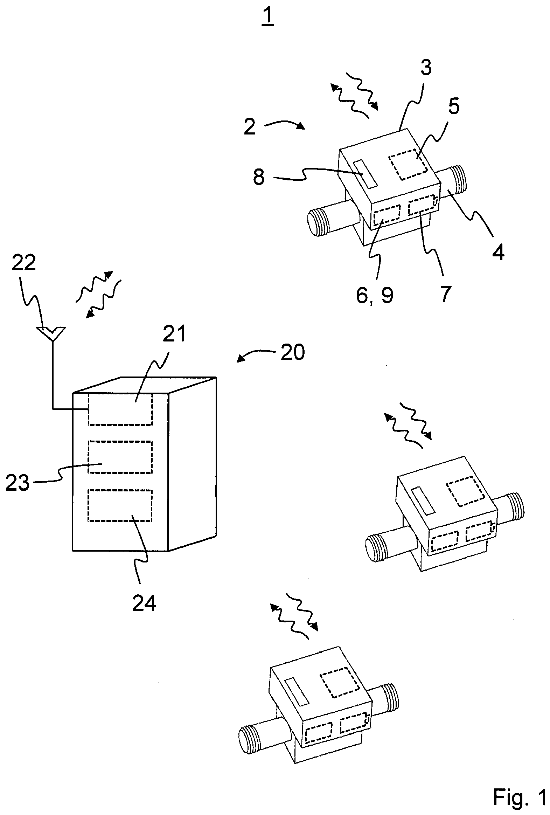

Bezugsziffer 1 in Fig. 1 bezeichnet ein Kommunikationssystem, welches anhand des erfindungsgemäßen Verfahrens betrieben wird. Das Kommunikationssystem 1 dient zur Datenübertragung zwischen mehreren Kommunikationsteilnehmern, d. h. mehreren Endgeräten und einem Datensammler 20. Die Endgeräte sind als Verbrauchszähler 2 ausgestaltet, welche jeweils als Parameter den Verbrauch an einem Versorgungsmedium (z. B. Wasser, Wärmemenge, Gas, Strom oder dergleichen) bestimmen. Bei den Daten handelt es sich um entsprechende Verbrauchsdaten und/oder Betriebsdaten, die in Form von Datenpaketen zwischen den Kommunikationsteilnehmern via Funk übertragen werden. Je nachdem, ob ein Verbrauchszähler 2 z. B. gerade Verbrauchsdaten an den Datensammler 20 sendet oder Betriebsdaten vom Datensammler 20 empfängt, kann der jeweilige Verbrauchszähler 2 bzw. der Datensammler 20 Sender oder Empfänger sein. Der Datensammler 20 umfasst ein Kommunikationsmodul 21 mit Antenne 22, einer Steuereinheit 23 sowie einen Datenspeicher 24 zum Sammeln bzw. Speichern der Daten. Der Datensammler 20 kann die Daten anschließend an eine, in den Figuren nicht dargestellte, übergeordnete Zentraleinheit, wie z. B. die Schaltzentrale des Versorgers drahtlos oder drahtgebunden übermitteln. Ferner umfasst der Datensammler 20 eine Energieversorgung (ebenfalls nicht dargestellt).

Hierbei kann es sich um einen Netzanschluss oder einen Energiespeicher, wie z. B. eine Batterie oder einen Akkumulator handeln.

Die Verbrauchszähler 2 in Fig. 1 sind als Fluidzähler ausgestaltet, die jeweils ein Elektronikgehäuse 3 zur Aufnahme der Elektronikkomponenten umfassen. Jeder der Verbrauchszähler 2 umfasst zudem ein Anschlussgehäuse 4 zum Anschluss des Verbrauchszählers 2 in ein der Übersichtlichkeit halber in den Figuren nicht dargestelltes Versorgungsnetz, wie z. B. die Trinkwasserversorgung eines Haushaltes. Ferner umfasst der Verbrauchszähler 2 ein Mittel zur Verbrauchsbestimmung (ebenfalls in Fig. 1 nicht dargestellt), anhand dessen der Verbrauch an einem Versorgungsmedium ermittelt wird. Der ermittelte Verbrauch kann über eine Kommunikationseinrichtung 5 an den Datensammler 20 via Funk übertragen werden. Zudem umfasst der Verbrauchszähler 2 eine Steuer- und Auswerteeinheit 9 zum Steuern des Verbrauchszählers 2, eine Energieversorgung 7 sowie eine Anzeige 8, z. B. zur Anzeige der aktuellen Verbrauchswerte. Der Verbrauchszähler 2 umfasst zudem mindestens einen Mikroprozessor 6, welcher vorzugsweise der Steuer- und Auswerteeinheit 9 zugeordnet ist. Anhand derartiger Mikroprozessoren 6 können unterschiedliche Funktionen der Steuer- und Auswerteeinheit 9 durchgeführt werden. Beispielsweise ist der Mikroprozessor 6 dazu hergerichtet, die Daten bzw. die Datenpakete zu Kodieren und Dekodieren. Die Energieversorgung 7 dient hierbei dazu, den Mikroprozessor 6 und/oder die Kommunikationseinrichtung 5 und/oder die Anzeige 8 und/oder das Mittel zur Verbrauchsbestimmung für deren Betrieb mit Energie zu versorgen. Dabei kann es zu kritischen Zuständen der Energieversorgung 7 kommen, beispielsweise durch energieintensive Prozesse, wie z. B. die Kodierung bzw. Dekodierung von Daten, wodurch ein schädigender Spannungsabfall an der Energieversorgung 7 entstehen kann.

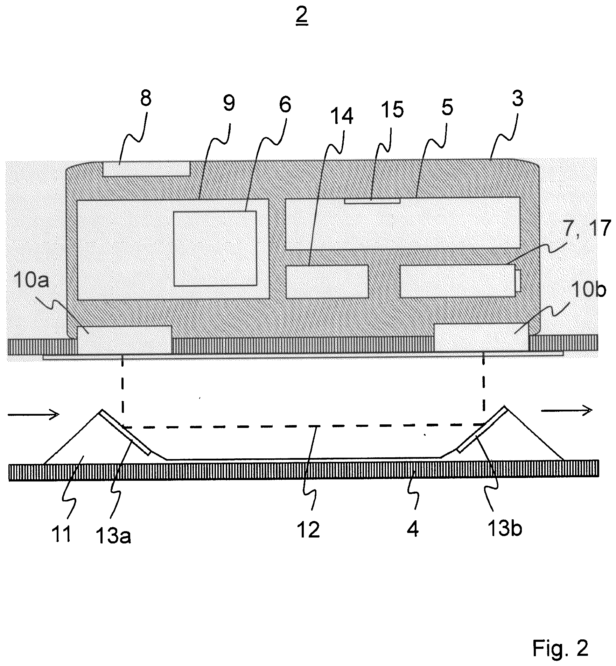

In Fig. 2 ist eine vereinfachte Ausgestaltungsvariante des erfindungsgemäßen Verbrauchszählers 2 dargestellt. Bei dem Verbrauchszähler 2 handelt es sich um einen Wasserzähler, der als Mittel zur Verbrauchsbestimmung an Wasser eine Ultraschallwandleranordnung umfasst. Die Ultraschallwandleranordnung besteht hierbei aus zwei Ultraschallwandlern 10a, 10b sowie einem Messeinsatz 11, welcher z. B. aus Kunststoff gefertigt und in einfacher Weise in das Anschlussgehäuse 4 des Verbrauchszählers 2 einschiebbar bzw. installierbar ist. Der Messeinsatz 11 umfasst ferner zwei Umlenkeinrichtungen 13a, 13b die dazu vorgesehen sind, eine zwischen den Ultraschallwandlern 10a, 10b befindliche Ultraschallmessstrecke 12 umzulenken, sodass diese U-förmig durch den Messeinsatz 11 verläuft. Die Durchströmungsrichtung des Wassers ist in Fig. 2 anhand von Pfeilen markiert.

Gemäß einer bevorzugten Ausgestaltungsvariante des Verbrauchszählers 2 wird der Wasserverbrauch dadurch bestimmt, dass die Ultraschallwandler 10a, 10b Ultraschallsignale entlang der Ultraschallmessstrecke 12 senden. Die Ultraschallsignale verlaufen hierbei in und entgegen der Durchströmungsrichtung des Wassers von dem einen Ultraschallwandler 10a zu dem anderen Ultraschallwandler 10b und umgekehrt. Anschließend kann z. B. anhand der Laufzeiten der Ultraschallsignale in und entgegen der Durchströmungsrichtung eine Laufzeitdifferenz der Ultraschallsignale ermittelt werden, die zur Durchflussmengenbestimmung herangezogen wird.

Der Mikroprozessor 6 kann, wie in Fig. 2 gezeigt, integraler Bestandteil der Steuer- und Auswerteeinheit 9 sein, die unter anderem auch zum Steuern der Ultraschallwandler 10a, 10b (Frequenzauswahl, Sendezeiten oder dergleichen) und zum Auswerten der Verbrauchsdaten dient. Ferner kann ein Datenspeicher 14 vorgesehen sein, der z. B. dazu hergerichtet ist, die Betriebs- und/oder Verbrauchsdaten zu speichern, sodass diese zu einem späteren Zeitpunkt über die Kommunikationseinrichtung 5 an den Datensammler 20 gesendet werden können. Die Kommunikationseinrichtung 5 kann hierzu eine vorzugsweise integrierte Antenne 15 zur Funkübertragung der Betriebs- und/oder Verbrauchsdaten aufweisen. Gemäß einer besonderen Ausgestaltung der vorliegenden Erfindung kann auch ein Funkchip zur Kommunikation in den Mikroprozessor 6 integriert sein.

Die Energieversorgung 7 umfasst einen Energiespeicher, wie z. B. eine Batterie oder einen Akkumulator, und besitzt zumindest eine elektrische Größe, deren Wert sich im Wesentlichen proportional zur fortschreitenden Versorgung ändert. Gemäß einer bevorzugten Ausgestaltungsvariante wird als elektrische Größe um die elektrische Spannung bzw. Restspannung der Energieversorgung 7 herangezogen, die mit einsetzendem Verbrauch sinkt, z. B. während der Dekodierung der Datenpakete durch den Mikroprozessor 6. Ausdrücklich umfasst sind im Rahmen der Erfindung jedoch auch andere elektrische Größen der Energieversorgung 7, wie z. B. elektrische Ladung, Stromstärke, Widerstand, Leistung, Arbeit, Kapazität, Frequenz, Periodendauer, Induktivität, Stromdichte oder dergleichen.

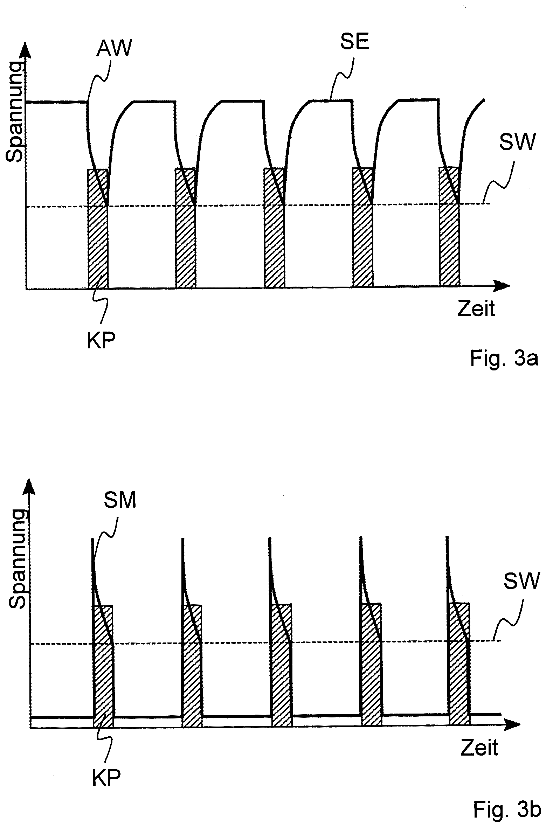

Der Mikroprozessor 6 kodiert die Daten vor dem Senden und/oder dekodiert die Daten nach dem Empfang. Wie in Fig. 3a gezeigt, erfolgt das Kodieren bzw. Dekodieren dabei phasenweise in sogenannten Kodierphasen KP, in denen sich der Wert der elektrischen Größe d. h. die elektrische Spannung von einem Ausgangswert AW aus ändert, z. B. sinkt. Zwischen den Kodierphasen KP sind Regenerationsphasen zur zumindest teilweisen Regeneration der elektrischen Größe vorgesehen. Zweckmäßigerweise bemisst sich die Dauer einer Regenerationsphase derart, dass sich der Wert der elektrischen Größe während der Regenerationsphase zum Ausgangswert AW hin ändert bzw. diesen wieder erreicht. Die Kodierung bzw. Dekodierung wird somit nicht am Stück durchgeführt, sondern peu à peu, um die Energieversorgung 7 zu schonen und nicht eine zu tiefe Spannung zuzulassen, d. h. es werden Regenerationspausen (Regenerationsphasen) zwischen den jeweiligen Dekodierungsschritten (Kodierphasen) eingelegt. Beispielsweise wird dadurch verhindert, dass die Passivierungsschicht der Batterie zu stark gebrochen wird, sodass die Kodier- und Regenerationsphasen periodisch im Wechsel angeordnet sind. Ferner können die Regenerationsphasen derart lang bemessen sein, dass die eigentlich benötigte Regenerationszeit deutlich überschritten wird, wie in Fig. 3a gezeigt, um auch bei unvorhersehbaren Strombezügen, wie z. B. durch plötzlich auftretende Datensendungen, ausreichend Regenerationszeit zur Verfügung zu haben.

Gemäß einer bevorzugten Ausgestaltung der Erfindung wird anhand der elektrischen Größe ein Schwellenwert SW der elektrischen Größe festgelegt, wobei sich der Wert der elektrischen Größe während der Kodierphase KP vom Ausgangswert AW zum Schwellenwert SW hin ändert. Die Dauer der Kodierphase KP bemisst sich dabei derart, dass der Wert der elektrischen Größe den Schwellenwert SW während der Kodierphase KP nicht erreicht oder untererschreitet. Ferner kann sich der Ausgangswert AW im Laufe der Betriebsdauer der Energieversorgung ändern, beispielsweise aufgrund von Alterung und Verschleiß des Energiespeichers (z. B. Batterie), sodass z. B. der Ausgangswert AW der elektrischen Spannung von Kodierphase KP zu Kodierphase KP allmählich sinkt.

Vorzugsweise ist ein, in den Figuren nicht dargestellter, interner Timer vorgesehen, der dazu dient, dass sich der gesamte Mikroprozessor 6 oder eine funktionelle Gruppe des Mikroprozessors 6 in einen Stand-by-Betrieb versetzen lässt, sodass sich die Energieversorgung 7 regenerieren kann, d. h. die Regenerationsphase bzw. der Wechsel zwischen Kodierphase KP1-KPn und Regenerationsphase wird anhand des internen Timers bzw. dessen Timersignals gesteuert. Eine funktionelle Gruppe des Mikroprozessors 6 ist z. B. der Schaltungsteil des Mikroprozessors 6 zur Kodierungs- sowie Dekodierungssteuerung. Der interne Timer kann hierbei z. B. als separat verbautes Modul, als Baugruppe der Steuer- und Auswerteeinheit 9, als reine Softwareapplikation oder als funktionelle Gruppe des Mikroprozessors 6 implementiert werden.

In Fig. 3a ist die an der Energieversorgung 7 z. B. vor der Schalteinrichtung anliegende Spannung als Spannungskurve SE und in Fig. 3b die z. B. nach der Schalteinrichtung am Mikroprozessor 6 anliegende Spannung als Spannungskurve SM dargestellt. Die Spannung kann hierbei initial erfasst bzw. gemessen oder anhand der Kennwerte des Energiespeichers festgelegt werden. Eine kontinuierliche Spannungsmessung ist für den Verfahrensablauf jedoch nicht erforderlich. Beispielsweise kommt es durch das Einschalten der Dekodierungssteuerung zu Beginn der Kodierphase KP zu einem abrupten Spannungsanstieg der Spannungskurve SM sowie einen durch den Energieverbrauch begründeten raschen Spannungsabfall der Spannungskurve SE. Durch den durch die Dekodierung hervorgerufenen zusätzlichen Strombezug des Mikroprozessors 6 kommt es nach anfänglichem Anstieg der Spannungskurve SM, zu einem im Wesentlichen analog zum Spannungsabfall der Spannungskurve SE verlaufenden Spannungsabfall der Spannungskurve SM. Um den Energiespeicher zu schonen und eine nicht zu tiefe Spannung zuzulassen, wird das Dekodieren hierbei zeitweise und periodisch abgeschaltet, sodass sich die Energieversorgung 7 in zwischengeschalteten Regenerationsphasen regenerieren kann, d. h. die Datenpakete werden in Abhängigkeit von dem Spannungswert der Energieversorgung 7 stückweise dekodiert. Die Zeiten der Kodierphase KP und den zwischengeschalteten Regenerationsphasen werden hierbei derart festgelegt, um eine ausreichende Regeneration des Energiespeichers gewährleisten zu können. Das Ziel hierbei ist, durch eine stückweise Dekodierung der Datenpakete keinen zusätzlichen Spannungsabbruch am Mikroprozessor 6 zu erzeugen oder nicht zu viel Energie am Stück aus dem Energiespeicher zu ziehen.

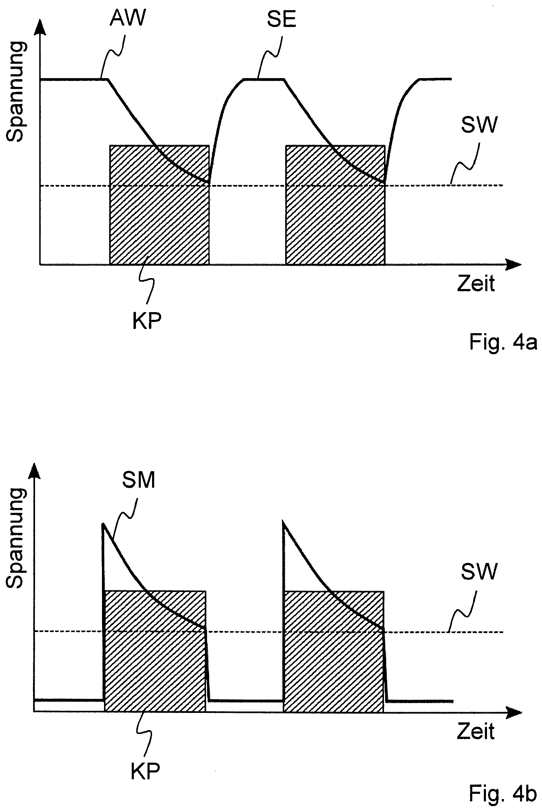

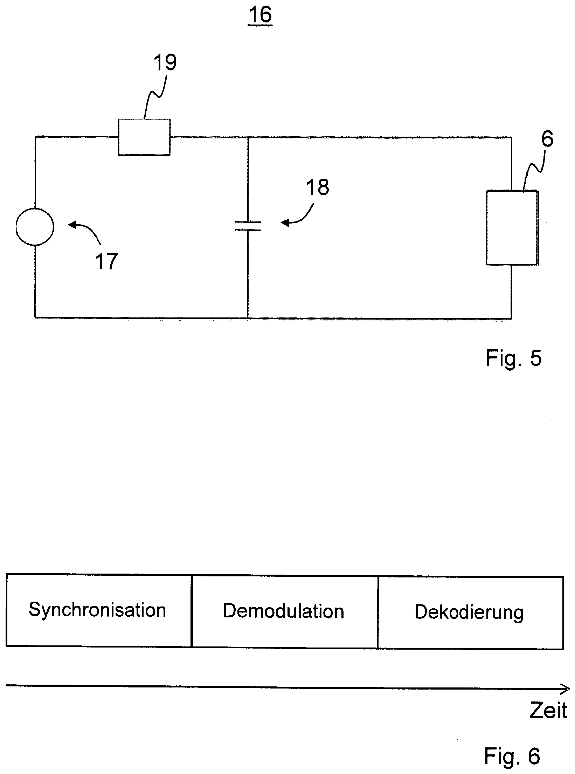

Ferner kann der Verlauf der Spannungskurve SE (gemäß Fig. 4a) sowie der Verlauf der Spannungskurve SM (gemäß Fig. 4b) durch das Hinzufügen eines Energiepuffers in praktischer und kostengünstiger Weise verbessert werden. Dadurch kann der Spannungsabfall verzögert werden, sodass über den Energiepuffer zusätzlich Energie geliefert wird, während die Dekodierung erfolgt. Eine stark vereinfachte Schaltungsanordnung 16 einer Energieversorgung 7 mit Batterie 17 als Energiespeicher und einem als Energiepuffer vorgesehenen Kondensator 18 ist in Fig. 5 dargestellt. Während keine Dekodierung über den Mikroprozessor 6 stattfindet, können sich Batterie 17 und Kondensator 18 regenerieren. Demgegenüber wird der Mikroprozessor 6 bzw. die funktionelle Gruppe zur Dekodierung im verbundenen bzw. zugeschalteten Zustand über die Batterie 17 und den Kondensator 18 mit Energie versorgt, wobei der Kondensator 18 den Spannungsabfall glättet. Die Schalteinrichtung zum An- und Abschalten der Dekodierung befindet sich hierbei als funktionelle Gruppe im oder am Mikroprozessor 6, welcher vorzugsweise als SMD-Baustein ausgestaltet und der Steuer- und Auswerteeinheit 9 zugeordnet ist.

Zweckmäßigerweise kann die Zeitdauer t der Dekodierphase definiert werden, bei der der Schwellenwert SW voraussichtlich nicht erreicht wird. Der Spannungsabbruch $\Delta V$ errechnet sich hierbei anhand des Produkts aus Stromstärke I und Zeitdauer t geteilt durch die Kapazität C des Kondensators 18. Beispielsweise könnte die Zeitdauer t der Dekodierung 20 ms betragen, sodass ein Mikroprozessor 6 mit einer benötigten Stromstärke von z. B. 4 mA und einem Kondensator mit 1000 µF einen Spannungsabbruch von 0,08 V verursacht:

$$U(\Delta \text{ entladen}) = I \cdot t / C = 4 \text{ mA} \cdot 20 \text{ ms} / 1000 \text{ µF} = 0{,}08 \text{ V}.$$

Ferner kann der Spannungsfall der beim Stromziehen entsteht U(nach Entladen) sowie der Spannungszuwachs während des Aufladens U(nach Aufladen) z. B. für eine Batterie mit einer Batteriespannung (U(bat)) von 3,3 V ermittelt werden:

$$U(\text{nach Entladen}) = U(\text{Bat}) - U(\Delta \text{ entladen}) = 3,3 - 0,08 = 3,22 \text{ V}$$

$$U(\text{nach Aufladen}) = U(\text{nach Entladen}) + U(\Delta \text{ entladen}) \cdot (1-e^{\wedge}(-t/\tau)).$$

Zudem kann z. B. aus dem Schwellenwert SW die Regenerationszeit t abgeleitet werden, wobei die Regenerationszeit t, die der Kondensator 18 zur Regeneration benötigt, anhand der Zeitkonstante $\tau$ berechnet werden kann. Die Regeneration bzw. Aufladung des Kondensators 18 an der Spannung der Batterie 17 U(Bat) über einen in Reihe zum Kondensator 18 geschalteten Widerstand 19 erfolgt exponentiell. Die Zeitkonstante $\tau$ der Reihenschaltung aus Kondensator 18 und Widerstand 19 ist das Produkt aus Widerstand R und Kapazität C.

$$\tau = R \cdot C$$

Beispielsweise errechnet sich somit bei einer Batteriespannung U(Bat) = 3,3 V, einem Widerstand von 2000 $\Omega$ und einem Kondensator 18 mit einer Kapazität = 1000 $\mu$F eine Regenerationszeit t von 9,2 s, in der die Dekodierung abgeschaltet sein muss, um den Kondensator 18 zu laden:

$$U(\text{nach Aufladen}) = 0,99 \, U(\text{bat})$$

$$U(\Delta \text{ Aufladen}) = U(\text{nach Aufladen}) - U(\text{nach Entladen})$$

$$U(\Delta \text{ Aufladen}) = U(\Delta \text{ Entladen}) \cdot (1 - e^{\wedge}(-t/\tau))$$

$$U(\Delta \text{ Aufladen}) / U(\Delta \text{ Entladen}) = (1 - e^{\wedge}(-t/\tau))$$

$$e^{\wedge}(-t/\tau) = 1 - U(\Delta \text{ Aufladen}) / U(\Delta \text{ Entladen})$$

$$t = -\tau \cdot \ln(1 - U(\Delta \text{ Aufladen}) / U(\Delta \text{ Entladen}))$$

$$\tau = RC = 2000 \text{ ohm} \cdot 1000 \text{ }\mu\text{F} = 2 \text{ s}$$

$$t = -2 \cdot \ln(1 - (0,99 \cdot 0,08V) / (0,08V)) \text{ s}$$

$$t = 9,2 \text{ s}.$$

Gemäß einer bevorzugten Ausgestaltung der vorliegenden Erfindung kann der Schwellenwert SW vorgegeben bzw. festgelegt werden, wobei die Zeitkonstante $\tau$ anhand des Schwellenwertes SW bestimmt wird. Über den Timer bzw. das Timersignal kann anschließend die Einteilung der Kodierphasen KP1-KPn sowie der Regenerationsphasen erfolgen, d. h. die Zeitdauer der einzelnen Phasen wird durch den Timer vorgegeben. Das Timersignal kann hierbei im Vorfeld programmiert, durch Funk vorgegeben oder an den jeweiligen Bedingungen vor Ort kontinuierlich angepasst werden.

In Fig. 6 ist eine Ausgestaltungsvariante eines Rechenvorgangs des Mikroprozessors 6 dargestellt. Der Mikroprozessor 6 wird dabei derart betrieben, dass dieser die Daten nach dem Empfang dekodiert, wobei das Dekodieren über einen Rechenzyklus erfolgt. Der Rechenzyklus umfasst hierbei die Bearbeitung einer vollständigen Dekodieraufgabe, die in Fig. 6 aus den Einheiten Synchronisation, Demodulierung und Dekodierung besteht, d. h. logisch der Bitübertragungsschicht zugeordnet ist, um eine physische Verbindungen zur Übertragung der Bits bzw. Daten oder Datenpakete einzurichten. Die Synchronisation sowie Demodulation dienen hierbei zur Aufbereitung der Daten. Ferner kann der gesamte Rechenzyklus im Rahmen der Erfindung in Kodier- und Regenerationsphasen eingeteilt werden.

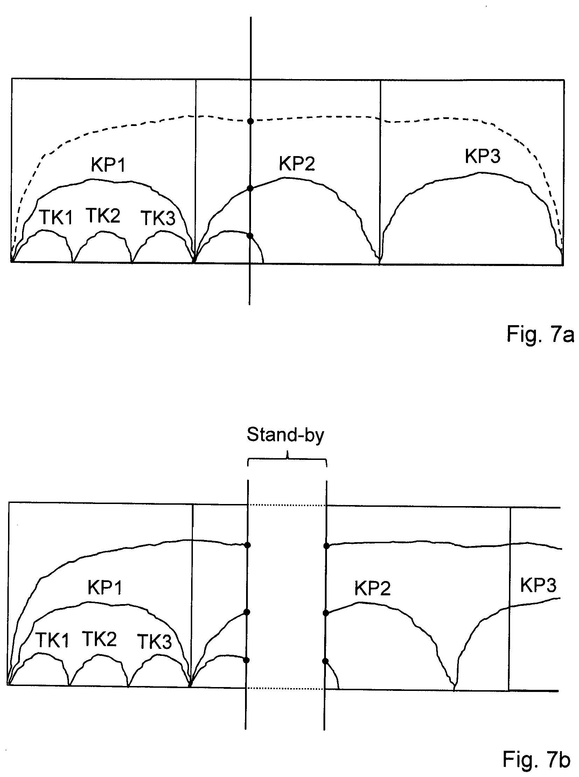

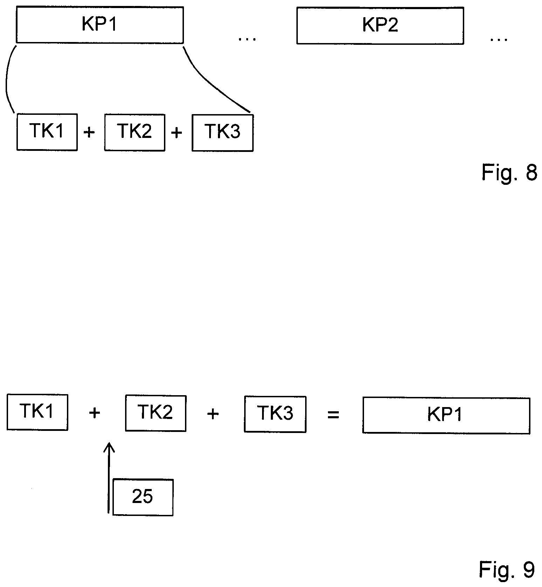

Fig. 7a zeigt den Rechenvorgang aus Fig. 6 im Detail. Der gesamte Rechenvorgang umfasst den Rechenzyklus, der als gestrichelte Kurve dargestellt ist. Der Rechenzyklus umfasst Kodierphasen KP1-KP3, die jeweils einen funktionellen Teil der gesamten Dekodieraufgabe darstellen (z. B. Synchronisation, Demodulation und Dekodierung). Die Kodierphasen KP1-KP3 sind wiederum in Teilkodierphasen TK1-TK3 unterteilt, wie auch schematisch in Fig. 8 anhand der Kodierphase KP1 dargestellt ist. Derartige Teilkodierphasen TK1-TK3 stellen in der Regel keinen eigenständigen funktionellen Teil der Dekodieraufgabe dar, sondern umfassen lediglich einen Teilbereich dessen, sodass eine Kodierphase KP1-KP3 zumindest zwei, bevorzugt mehrere Teilkodierphasen TK1-TKn umfasst. Der Übersichtlichkeit halber sind in den Figuren nur ein Teil der Teilkodierphasen TK1-TKn dargestellt. Der Rechenzyklus kann hierbei an einer beliebigen Stelle oder an mehreren Stellen unterbrochen werden, z. B. sobald der Schwellenwert SW erreicht oder überschritten wird. Diese Unterbrechung ist in Fig. 7a anhand der vertikalen Geraden dargestellt. Die Unterbrechung in Fig. 7a ist innerhalb der Kodierphase KP2 angeordnet und stellt den Start einer Regenerationsphase bzw. des Stand-by-Betriebs des Mikroprozessors 6 dar. Die Dauer dieser Regenerationsphase ist hierbei derart bemessen, dass sich der Wert der elektrischen Größe während der Regenerationsphase zum Ausgangswert AW hin ändert und/oder dieser erreicht wird, d. h. eine zumindest teilweise Regeneration der Energieversorgung stattfindet. Der Rechenzyklus wird, wie in Fig. 7b gezeigt, nach dem Ablauf der Regenerationsphase bzw. des Stand-by-Betriebs an gleicher Stelle wieder fortgesetzt.

Wie in Fig. 8 und Fig. 9 gezeigt, ist die Kodierphase KP1 die Summe ihrer Teilkodierphasen TK1-TKn, sodass eine vollständige Kodierung bzw. Dekodierung erfolgt, sobald alle Kodierphasen KP1-KPn sowie deren Teilkodierphasen TK1-TKn phasenweise durchgeführt worden sind und somit der Rechenzyklus beendet ist. Zusätzlich können zudem Events bzw. Ereignisse 25 vorgesehen sein, die im Bereich der Kodierphasen KP1-KPn bzw. Teilkodierphasen TK1-TKn zwischengeschaltet sind. Ein Ereignis 25 kann beispielsweise eine dringende Aufgabe sein, welche z. B. die Sensorik betreffende Messprozesse umfasst, die unter Zurückstellung der Kodierung bzw. Dekodierung schnellstmöglich mit höherer Priorität durchgeführt werden soll.

Für den Fall, dass während der Dekodierung dringend Energie für einen anderen Arbeitsschritt benötigt wird, wie z. B. für die Sensorik bzw. Mittel zur Verbrauchsbestimmung oder die Übermittlung von Betriebsdaten, können diese Arbeitsschritte über die Steuer- und Auswerteeinheit 9 bzw. den Mikroprozessor 6 priorisiert werden. In praktischer Weise kann die Steuer- und Auswerteeinheit 9 anhand der Art und Dauer des priorisierten Arbeitsschrittes, d. h. beispielsweise der Strom- oder Leistungsentnahme, berechnen, wieviel Strom verbraucht wurde oder um welchen Spannungswert die Spannung der Batterie 17 gesunken ist. Anhand dieses Stromverbrauchs bzw. Spannungseinbruchs kann der Verbrauchszähler 2 nun über die Steuer- und Auswerteeinheit 9 bestimmen bzw. berechnen, welche Regenerationszeit t(reg) benötigt wird, um eine vorzugsweise vollständige Regeneration des Kondensators 18 sicherzustellen. In praktischer Weise beginnt der Mikroprozessor 6 mit der Dekodierung, sobald diese Regenerationszeit t(reg) verstrichen ist, d. h. der Kondensator 18 wieder geladen ist.

In gleicher Weise kann eine Priorisierung einer Datendekodierung erfolgen, z. B. bei der Übertragung von wichtigen Betriebs- und Steuerdaten, die beispielsweise bei einem Firmwareupdate benötigt werden. Hierzu können die Daten bzw. Datenpakete eine Prioritätsinformation enthalten, welche durch den Verbrauchszähler 2 lesbar ist. Die Bearbeitung durch den Mikroprozessor 6 erfolgt vorzugsweise anhand dieser Prioritätsinformation. Dadurch kann der Mikroprozessor 6 entscheiden, ob die Daten möglichst schnell oder möglichst energiesparend dekodiert werden sollen.

Zudem kann mindestens ein weiterer, in den Figuren nicht dargestellter, Kondensator zur Spannungsglättung eingesetzt werden, sodass über diesen Kondensator Energie geliefert wird, während sich die Energieversorgung 7 regeneriert, bzw. die Batterie 17 sowie der Kondensator 18 regenerieren. Dadurch werden abrupte Spannungsabfälle durch das Abschalten der Energieversorgung 7 sowie Spannungsspitzen begrenzt oder gar verhindert.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

## BEZUGSZEICHENLISTE

1 Kommunikationssystem
2 Verbrauchszähler
3 Elektronikgehäuse
4 Anschlussgehäuse

| 5 | Kommunikationseinrichtung |
|---|---|
| 6 | Mikroprozessor |
| 7 | Energieversorgung |
| 8 | Anzeige |
| 9 | Steuer- und Auswerteeinheit |
| 10a | Ultraschallwandler |
| 10b | Ultraschallwandler |
| 11 | Messeinsatz |
| 12 | Ultraschallmessstrecke |
| 13a | Umlenkeinrichtung |
| 13b | Umlenkeinrichtung |
| 14 | Datenspeicher |
| 15 | Antenne |
| 16 | Schaltungsanordnung |
| 17 | Batterie |
| 18 | Kondensator |
| 19 | Widerstand |
| 20 | Datensammler |
| 21 | Kommunikationsmodul |
| 22 | Antenne |
| 23 | Steuereinheit |
| 24 | Datenspeicher |
| 25 | Ereignis |

| AW | Ausgangswert |
|---|---|
| SW | Schwellenwert |
| SE | Spannungskurve Energieversorgung |
| SM | Spannungskurve Mikroprozessor |
| KP | Kodierphase |
| TK | Teilkodierphase |

**Patentansprüche**

1. Verfahren zum Betrieb eines Kommunikationssystems (1), bei dem Daten von einem Kommunikationsteilnehmer gesendet und/oder empfangen werden, wobei der Kommunikationsteilnehmer
eine Kommunikationseinrichtung (5) zum Senden und/oder Empfangen der Daten,
einen Mikroprozessor (6) und
eine Energieversorgung (7) umfasst, wobei
die Energieversorgung (7) den Mikroprozessor (6) und/oder die Kommunikationseinrichtung (5) für deren Betrieb mit Energie versorgt,
die Energieversorgung (7) eine elektrische Größe aufweist, deren Wert sich im Zuge der Versorgung des Mikroprozessors (6) und/oder der Kommunikationseinrichtung (5) mit Energie von einem Ausgangswert (AW) aus ändert,
der Mikroprozessor (6) die Daten vor dem Senden kodiert und/oder nach dem Empfang dekodiert, und
das Kodieren bzw. Dekodieren über einen Rechenzyklus erfolgt, **dadurch gekennzeichnet, dass**
der Rechenzyklus bei einer Änderung der elektrischen Größe während des Rechenzyklus, vorzugsweise an beliebiger Stelle, unterbrochen und wieder fortgesetzt wird,
das Kodieren und/oder Dekodieren während des Rechenzyklus getrennt in einzelnen Kodier- bzw. Dekodierphasen (KP1-KPn) erfolgt, in denen sich der Wert der elektrischen Größe ändert,
zwischen den und/oder innerhalb der Kodier- bzw. Dekodierphasen (KP1-KPn) Regenerationsphasen zur zumindest teilweisen Regeneration der elektrischen Größe vorgesehen sind, und
die Dauer einer Regenerationsphase derart bemessen ist, dass sich der Wert der elektrischen Größe während der Regenerationsphase zum Ausgangswert (AW) hin ändert und/oder diesen erreicht.

2. Verfahren nach Anspruch 1, **dadurch gekennzeichnet, dass** eine Kodier-bzw. Dekodierphase (KP1-KPn) mehrere Teilkodier-bzw. -dekodierphasen (TK1-TKn) umfasst.

3. Verfahren nach Anspruch 1 oder 2, **dadurch gekennzeichnet, dass** ein Schwellenwert (SW) der elektrischen Größe festlegbar ist, wobei aus dem Schwellenwert (SW) eine Zeitdauer t abgeleitet wird und der Wechsel zwischen Kodier-bzw. Dekodierphase (KP1-KPn) und Regenerationsphase über ein Timersignal gesteuert wird.

4. Verfahren nach einem der vorhergehenden Ansprüche, **dadurch gekennzeichnet, dass** für den Mikroprozessor (6) ein Stand-by-Betrieb vorgesehen ist und der Mikroprozessor (6) während der Regenerationsphase in den Stand-by- Betrieb versetzt wird.

5. Verfahren nach einem der vorhergehenden Ansprüche, **dadurch gekennzeichnet, dass** es sich bei dem Kodieren und/oder Dekodieren um eine Kanalkodierung und/oder Kanaldekodierung, eine Quellkodierung und/oder Quelldekodierung, eine Verschlüsselung und/oder Entschlüsselung, und/oder eine Telegrammkodierung und/oder Telegrammdekodierung handelt.

6. Verfahren nach einem der vorhergehenden Ansprüche, **dadurch gekennzeichnet, dass** ein Energiespeicher, insbesondere eine Batterie (17), als Teil der Energieversorgung (7) vorgesehen ist und es sich bei der elektrischen Größe der Energieversorgung (7) um den Lade- und/oder Spannungszustand des Energiespeichers handelt.

7. Verfahren nach einem der vorhergehenden Ansprüche, **dadurch gekennzeichnet, dass** ein Energiepuffer, insbesondere ein Kondensator (18), als Teil der Energieversorgung (7) vorgesehen ist und es sich bei der elektrischen Größe der Energieversorgung (7) um den Lade- und/oder Spannungszustand des Energiepuffers handelt.

8. Verfahren nach Anspruch 3, **dadurch gekennzeichnet, dass** die Dauer einer Kodier-bzw. Dekodierphase (KP1-KPn) derart bemessen ist, dass der Wert der elektrischen Größe den Schwellenwert (SW) während der Kodier-bzw. Dekodierphase (KP1-KPn) nicht erreicht oder unterschreitet.

9. Verfahren nach einem der vorhergehenden Ansprüche, **dadurch gekennzeichnet, dass** die Kodier-bzw. Dekodierphasen (KP1-KPn) und die Regenerationsphasen periodisch im Wechsel angeordnet sind.

10. Verfahren nach einem der vorhergehenden Ansprüche, **dadurch gekennzeichnet, dass** die Daten in Form von Datenpaketen gesendet und empfangen werden.

11. Verfahren nach einem der vorhergehenden Ansprüche, **dadurch gekennzeichnet, dass** der Mikroprozessor (6) dazu vorgesehen ist, auch andere Aufgaben neben dem Kodieren bzw. Dekodieren zu bearbeiten.

12. Verfahren nach einem der vorhergehenden Ansprüche, **dadurch gekennzeichnet, dass** die Daten eine Prioritätsinformation enthalten und/oder den jeweiligen Aufgaben Prioritäten zugewiesen werden und die Dauer der Kodier-bzw. Dekodierphasen (KP1-KPn) und/oder Regenerationsphasen anhand der Prioritätsinformation bemessen wird, wobei insbesondere vorgesehen ist, **dass** anhand der Prioritätsinformation eine Abarbeitungsreihenfolge der anstehenden Aufgaben ableitbar ist und Aufgaben mit höherer Priorität vorrangig abgearbeitet werden, und/oder insbesondere vorgesehen ist, **dass** Aufgaben mit höherer Priorität als die Kodierung und/oder Dekodierung zeitlich verschoben werden können, um Störungen oder Unterbrechungen im Rhythmus der Kodier-bzw. Dekodierphasen (KP1-KPn) zu verhindern oder zu begrenzen.

13. Verfahren nach Anspruch 11 oder 12, **dadurch gekennzeichnet, dass** ein für die Bearbeitung der jeweiligen Aufgabe benötigter Bedarfswert der elektrischen Größe sowie ein Zeitbedarfswert bestimmt werden und der Bedarfswert sowie der Zeitbedarfswert zur Bestimmung der Dauer der Regenerationsphasen herangezogen werden.

14. Verfahren nach einem der vorhergehenden Ansprüche, **dadurch gekennzeichnet, dass** der Kommunikationsteilnehmer ein Mittel zur Verbrauchsdatenerfassung umfasst.

15. Verfahren nach einem der vorhergehenden Ansprüche, **dadurch gekennzeichnet, dass** eine Messeinrichtung zur Bestimmung des Wertes der elektrischen Größe vorgesehen ist.

16. Verfahren nach einem der vorhergehenden Ansprüche, **dadurch gekennzeichnet, dass** das Senden und/oder Empfangen der Daten im Schmalband-Bereich erfolgt, insbesondere ist die Empfangsbandbreite der jeweiligen Messeinheit dabei kleiner 25 kHz, vorzugsweise kleiner 20 kHz, vorzugsweise kleiner 5 kHz, vorzugsweise kleiner 3 kHz, besonders vorzugsweise kleiner 2 kHz.

17. Verfahren nach einem der vorhergehenden Ansprüche, **dadurch gekennzeichnet, dass** die Gesamtverarbeitung der Kodier-bzw. Dekodierphase (KP) länger als 20 msec, vorzugsweise länger als 50 msec, besonders vorzugsweise länger als 100 msec dauert.

18. Verfahren nach einem der vorhergehenden Ansprüche, **dadurch gekennzeichnet, dass** die Dauer der einzelnen Kodier-bzw. Dekodierphasen (KP1-KPn) unterschiedlich lang sind und/oder unterschiedliche Empfängeralgorithmen umfassen.

19. Endgerät zur Bestimmung eines Parameters, umfassend
ein Mittel zur Parameterbestimmung und Erzeugung von Daten anhand des bestimmten Parameters,
eine Kommunikationseinrichtung (5) zum Senden und/oder Empfangen der Daten,
einen Mikroprozessor (6) und
eine Energieversorgung (7), wobei
die Energieversorgung (7) dazu peingerichtet ist, den Mikroprozessor (6) und/oder die Kommunikationseinrichtung (5) für deren Betrieb mit Energie zu versorgen,
die Energieversorgung (7) eine elektrische Größe aufweist, deren Wert sich im Zuge der Versorgung des Mikroprozessors (6) und/oder der Kommunikationseinrichtung (5) mit Energie von einem Ausgangswert (AW) aus ändert,
der Mikroprozessor (6) dazu hergerichtet ist, die Daten vor dem Senden zu kodieren und/oder nach dem Empfang zu dekodieren, wobei
das Kodieren bzw. Dekodieren über einen Rechenzyklus erfolgt,
**dadurch gekennzeichnet, dass**
der Mikroprozessor (6) derart konfiguriert ist, dass der Rechenzyklus bei einer Änderung der elektrischen Größe während des Rechenzyklus, vorzugsweise an beliebiger Stelle, unterbrochen und wieder fortgesetzt wird,
das Kodieren und/oder Dekodieren während des Rechenzyklus getrennt in einzelnen Kodier-bzw. Dekodierphasen (KP1-KPn) erfolgt, in denen sich der Wert der elektrischen Größe ändert,
zwischen den und/oder innerhalb der Kodier-bzw. Dekodierphasen (KP1-KPn) Regenerationsphasen zur zumindest teilweisen Regeneration der elektrischen Größe vorgesehen sind, und
die Dauer einer Regenerationsphase derart bemessen ist, dass sich der Wert der elektrischen Größe während der Regenerationsphase zum Ausgangswert (AW) hin ändert und/oder diesen erreicht.

20. Endgerät nach Anspruch 19, **dadurch gekennzeichnet, dass** die Energieversorgung (7) einen Energiespeicher, insbesondere eine Batterie (17), und/oder einen Energiepuffer, insbesondere ein Kondensator (18), umfasst, und/oder **dass** es sich bei dem Endgerät um einen Verbrauchszähler (2) handelt, welcher als Parameter den Verbrauch an einem Versorgungsmedium bestimmt und diesen in Form von Verbrauchsdaten zur Verfügung stellen kann.

**Claims**

1. Method for operating a communication system (1), in which data are transmitted and/or received by a communication participant, wherein the communication participant comprises
a communication device (5) for transmitting and/or receiving the data,
a microprocessor (6) and
an energy supply (7), wherein
the energy supply (7) supplies the microprocessor (6) and/or the communication device (5) with energy for the operation thereof,
the energy supply (7) has an electrical variable, the value of which changes from a starting value (AW) in the course of supplying the microprocessor (6) and/or the communication device (5) with energy,
the microprocessor (6) codes the data before transmission and/or decodes said data after reception, and
the coding and/or decoding is/are carried out using a computing cycle,
**characterized in that**
in the event of a change in the electrical variable during the computing cycle, the computing cycle is interrupted and continued again, preferably at any desired point,
the coding and/or decoding is/are carried out during the computing cycle separately in individual coding and/or decoding phases (KP1-KPn) in which the value of the electrical variable changes,
regeneration phases for at least partially regenerating the electrical variable are provided between and/or within the coding and/or decoding phases (KP1-KPn), and
the duration of a regeneration phase is such that the value of the electrical variable changes towards the starting value (AW) and/or reaches the latter during the regeneration phase.

**2.** Method according to Claim 1, **characterized in that** a coding and/or decoding phase (KP1-KPn) comprises a plurality of partial coding and/or decoding phases (TK1-TKn) .

**3.** Method according to Claim 1 or 2, **characterized in that** a threshold value (SW) of the electrical variable can be determined, wherein a period t is derived from the threshold value (SW) and the change between the coding and/or decoding phase (KP1-KPn) and the regeneration phase is controlled using a timer signal.

**4.** Method according to one of the preceding claims, **characterized in that** a standby mode is provided for the microprocessor (6), and the microprocessor (6) is changed to the standby mode during the regeneration phase.

**5.** Method according to one of the preceding claims, **characterized in that** the coding and/or decoding is/are channel coding and/or channel decoding, source coding and/or source decoding, encryption and/or decryption and/or message coding and/or message decoding.

**6.** Method according to one of the preceding claims, **characterized in that** an energy store, in particular a battery (17), is provided as part of the energy supply (7), and the electrical variable of the energy supply (7) is the state of charge and/or voltage state of the energy store.

**7.** Method according to one of the preceding claims, **characterized in that** an energy buffer, in particular a capacitor (18), is provided as part of the energy supply (7), and the electrical variable of the energy supply (7) is the state of charge and/or voltage state of the energy buffer.

**8.** Method according to Claim 3, **characterized in that** the duration of a coding and/or decoding phase (KP1-KPn) is such that the value of the electrical variable does not reach or undershoots the threshold value (SW) during the coding and/or decoding phase (KP1-KPn).

**9.** Method according to one of the preceding claims, **characterized in that** the coding and/or decoding phases (KP1-KPn) and the regeneration phases are arranged periodically in alternation.

**10.** Method according to one of the preceding claims, **characterized in that** the data are transmitted and received in the form of data packets.

**11.** Method according to one of the preceding claims, **characterized in that** the microprocessor (6) is provided for the purpose of also handling other tasks in addition to the coding and/or decoding.

**12.** Method according to one of the preceding claims, **characterized in that** the data contain an item of priority information and/or priorities are assigned to the respective tasks, and the duration of the coding and/or decoding phases (KP1-KPn) and/or regeneration phases is determined on the basis of the priority information, wherein provision is made, in particular, for an execution sequence of the pending tasks to be able to be derived on the basis of the priority information and for tasks of a higher priority to be executed as a matter of priority, and/or provision is made, in particular, for tasks of a higher priority than the coding and/or decoding to be able to be postponed in order to prevent or limit disruptions or interruptions in the rhythm of the coding and/or decoding phases (KP1-KPn) .

**13.** Method according to Claim 11 or 12, **characterized in that** a requirement value of the electrical variable, which is needed to handle the respective task, and a time requirement value are determined, and the requirement value and the time requirement value are used to determine the duration of the regeneration phases.

**14.** Method according to one of the preceding claims, **characterized in that** the communication participant comprises a means for capturing consumption data.

**15.** Method according to one of the preceding claims, **characterized in that** a measuring device for determining the value of the electrical variable is provided.

**16.** Method according to one of the preceding claims, **characterized in that** the data are transmitted and/or received in the narrowband; in particular, the reception bandwidth of the respective measuring unit is less than 25 kHz, preferably less than 20 kHz, preferably less than 5 kHz, preferably less than 3 kHz, particularly preferably less than 2 kHz.

17. Method according to one of the preceding claims, **characterized in that** the total processing of the coding and/or decoding phase (KP) lasts for longer than 20 msec, preferably longer than 50 msec, particularly preferably longer than 100 msec.

18. Method according to one of the preceding claims, **characterized in that** the durations of the individual coding and/or decoding phases (KP1-KPn) are different and/or comprise different receiver algorithms.

19. Terminal for determining a parameter, comprising
a means for determining parameters and generating data on the basis of the determined parameter,
a communication device (5) for transmitting and/or receiving the data,
a microprocessor (6) and
an energy supply (7), wherein
the energy supply (7) is configured to supply the microprocessor (6) and/or the communication device (5) with energy for the operation thereof,
the energy supply (7) has an electrical variable, the value of which changes from a starting value (AW) in the course of supplying the microprocessor (6) and/or the communication device (5) with energy,
the microprocessor (6) is set up to code the data before transmission and/or to decode said data after reception, wherein
the coding and/or decoding is/are carried out using a computing cycle,
**characterized in that**
in the event of a change in the electrical variable during the computing cycle, the microprocessor (6) is configured such that the computing cycle is interrupted and continued again, preferably at any desired point,
the coding and/or decoding is/are carried out during the computing cycle separately in individual coding and/or decoding phases (KP1-KPn) in which the value of the electrical variable changes,
regeneration phases for at least partially regenerating the electrical variable are provided between and/or within the coding and/or decoding phases (KP1-KPn), and
the duration of a regeneration phase is such that the value of the electrical variable changes towards the starting value (AW) and/or reaches the latter during the regeneration phase.

20. Terminal according to Claim 19, **characterized in that** the energy supply (7) comprises an energy store, in particular a battery (17), and/or an energy buffer, in particular a capacitor (18), and/or **in that** the terminal is a consumption meter (2) which determines, as a parameter, the consumption of a supply medium and can provide it in the form of consumption data.

## Revendications

1. Procédé de fonctionnement d'un système de communication (1), lors duquel des données d'un participant à la communication sont envoyées et/ou reçues, dans lequel le participant à la communication comprend
un dispositif de communication (5) pour envoyer et/ou recevoir les données,
un microprocesseur (6) et
une alimentation en énergie (7), dans lequel
l'alimentation en énergie (7) alimente le microprocesseur (6) et/ou le dispositif de communication (5) en énergie pour leur fonctionnement,
l'alimentation en énergie (7) possède une grandeur électrique, dont la valeur varie lors de l'alimentation en énergie du microprocesseur (6) et/ou du dispositif de communication (5) par rapport à une valeur de sortie (AW),
le microprocesseur (6) code les données avant envoi et/ou les décode après réception, et
le codage ou le décodage s'effectue sur un cycle de calcul, **caractérisé en ce que**
le cycle de calcul est interrompu puis repris lors d'une variation de la grandeur électrique pendant le cycle de calcul, de préférence à des positions aléatoires,
le codage et/ou le décodage s'effectue pendant le cycle de calcul séparé en phases individuelles de codage ou respectivement de décodage (KP1-KPn), lors desquelles la valeur de la grandeur électrique varie,
des phases de régénération sont prévues entre et/ou à l'intérieur des phases de codage ou de décodage (KP1-KPn) afin de régénérer au moins partiellement la grandeur électrique, et
la durée d'une phase de régénération est mesurée de telle sorte que la valeur de la grandeur électrique varie en s'approchant de la valeur de sortie (AW) et/ou atteint celle-ci.

2. Procédé selon la revendication 1, **caractérisé en ce qu'**une phase de codage ou de décodage (KP1-KPn) comprend plusieurs phases partielles de codage ou de décodage (TK1-TKn).

3. Procédé selon la revendication 1 ou 2, **caractérisé en ce qu'**une valeur seuil (SW) de la grandeur électrique peut être fixée, dans lequel une durée t peut être dérivée de la valeur seuil (SW) et le changement entre phase de codage ou de décodage (KP1-KPn) et phase de régénération peut être commandé par le biais d'un signal de minuterie.

4. Procédé selon l'une des revendications précédentes, **caractérisé en ce qu'**un mode veille est prévu pour le microprocesseur (6) et le microprocesseur (6) est commuté en mode veille pendant la phase de régénération.

5. Procédé selon l'une des revendications précédentes, **caractérisé en ce qu'**on entend, par codage et/ou décodage, un codage canal et/ou décodage canal, un codage source et/ou décodage source, un chiffrage et/ou déchiffrage, et/ou un codage télégramme et/ou décodage télégramme.

6. Procédé selon l'une des revendications précédentes, **caractérisé en ce qu'**un accumulateur d'énergie, en particulier une batterie (17), est prévu comme partie de l'alimentation en énergie (7) et on entend, par grandeur électrique de l'alimentation en énergie (7), l'état de charge et/ou de tension de l'accumulateur d'énergie.

7. Procédé selon l'une des revendications précédentes, **caractérisé en ce qu'**une réserve-tampon d'énergie, en particulier un condensateur (18), est prévue comme partie de l'alimentation en énergie (7) et on entend, par grandeur électrique de l'alimentation en énergie (7), l'état de charge et/ou de tension de la réserve-tampon d'énergie.

8. Procédé selon la revendication 3, **caractérisé en ce que** la durée d'une phase de codage ou de décodage (KP1-KPn) est mesurée de telle sorte que la valeur de la grandeur électrique n'atteint pas ou sous-dépasse la valeur seuil (SW) pendant la phase de codage ou de décodage (KP1-KPn).

9. Procédé selon l'une des revendications précédentes, **caractérisé en ce que** les phases de codage ou de décodage (KP1-KPn) et les phases de régénération sont agencées en alternance périodique.

10. Procédé selon l'une des revendications précédentes, **caractérisé en ce que** les données sont envoyées et reçues sous la forme de paquets de données.

11. Procédé selon l'une des revendications précédentes, **caractérisé en ce que** le microprocesseur (6) est prévu de façon à traiter d'autres tâches outre le codage et le décodage.

12. Procédé selon l'une des revendications précédentes, **caractérisé en ce que** les données contiennent une information de priorité et/ou des priorités sont attribuées aux tâches respectives et la durée des phases de codage et de décodage (KP1-KPn) et/ou des phases de régénération est mesurée à l'aide de l'information de priorité, dans lequel il est en particulier prévu qu'une séquence de traitement des tâches en attente soit dérivable à l'aide de l'information de priorité et les tâches de priorité supérieure sont traitées en premier, et/ou il est en particulier prévu que les tâches de priorité supérieure au codage et/ou au décodage peuvent être chronologiquement décalées, afin d'empêcher ou de limiter des perturbations ou des interruptions dans le rythme des phases de codage et de décodage (KP1-KPn).

13. Procédé selon la revendication 11 ou 12, **caractérisé en ce qu'**une valeur de besoins de la grandeur électrique nécessaire pour le traitement des tâches respectives ainsi qu'une valeur de besoins en temps sont déterminées et la valeur de besoins ainsi que la valeur de besoins en temps sont utilisées pour la détermination de la durée des phases de régénération.

14. Procédé selon l'une des revendications précédentes, **caractérisé en ce que** le participant à la communication comprend un moyen de saisie de données de consommation.

15. Procédé selon l'une des revendications précédentes, **caractérisé en ce qu'**un dispositif de mesure est prévu pour la détermination de la valeur de la grandeur électrique.

16. Procédé selon l'une des revendications précédentes, **caractérisé en ce que** l'envoi et/ou la réception des données s'effectue dans la plage de bande étroite, en particulier que la largeur de bande de réception de l'unité de mesure respective est donc inférieure à 25 kHz, de préférence inférieure à 20 kHz, de préférence inférieure à 5 kHz, de préférence inférieure à 3 kHz, tout particulièrement inférieure à 2 kHz.

**17.** Procédé selon l'une des revendications précédentes, **caractérisé en ce que** le traitement total de la phase de codage ou de décodage (KP) dure plus de 20 ms, de préférence plus de 50 ms, tout particulièrement plus de 100 ms.

**18.** Procédé selon l'une des revendications précédentes, **caractérisé en ce que** les durées des phases individuelles de codage ou de décodage (KP1-KPn) sont de longueurs différentes et/ou incluent différents algorithmes de réception.

**19.** Appareil de détermination d'un paramètre, comprenant
un moyen de détermination de paramètre et de production de données à l'aide du paramètre déterminé,
un dispositif de communication (5) pour envoyer et/ou recevoir les données,
un microprocesseur (6) et
une alimentation en énergie (7), dans lequel
l'alimentation en énergie (7) est disposée pour alimenter le microprocesseur (6) et/ou le dispositif de communication (5) en énergie pour leur fonctionnement,
l'alimentation en énergie (7) possède une grandeur électrique, dont la valeur varie lors de l'alimentation en énergie du microprocesseur (6) et/ou du dispositif de communication (5) par rapport à une valeur de sortie (AW),
le microprocesseur (6) est conçu pour coder les données avant l'envoi et/ou les décoder après la réception, dans lequel le codage ou respectivement le décodage s'effectue sur un cycle de calcul, **caractérisé en ce que**
le microprocesseur (6) est configuré de sorte que le cycle de calcul est interrompu puis repris lors d'une variation de la grandeur électrique pendant le cycle de calcul, de préférence à des positions aléatoires,
le codage et/ou le décodage s'effectue pendant le cycle de calcul séparé en phases individuelles de codage ou respectivement de décodage (KP1-KPn), lors desquelles la valeur de la grandeur électrique varie,
des phases de régénération sont prévues entre et/ou à l'intérieur des phases de codage ou de décodage (KP1-KPn) afin de régénérer au moins partiellement la grandeur électrique, et
la durée d'une phase de régénération est mesurée de telle sorte que la valeur de la grandeur électrique varie en s'approchant de la valeur de sortie (AW) et/ou atteint celle-ci.

**20.** Appareil selon la revendication 19, **caractérisé en ce que** l'alimentation en énergie (7) comprend un accumulateur d'énergie, en particulier une batterie (17), et/ou une réserve-tampon d'énergie, en particulier un condensateur (18), et/ou **en ce qu'**on entend par appareil un compteur de consommation (2), lequel détermine comme paramètre la consommation sur un moyen d'alimentation et peut fournir celle-ci sous forme de données de consommation.

1

2

3

5

8

6, 9

7

4

22

21

20

23

24

Fig. 1

<u>2</u>

Fig. 2

Fig. 3a

Fig. 3b

Fig. 4a

Fig. 4b

_16_

19

6

18

17

Fig. 5

| Synchronisation | Demodulation | Dekodierung |
|---|---|---|

Zeit

Fig. 6

Fig. 7a

Fig. 7b

| KP1 | ... | KP2 | ... |

| TK1 | + | TK2 | + | TK3 |

Fig. 8

| TK1 | + | TK2 | + | TK3 | = | KP1 |

| 25 |

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011113828 A1
- JP 2014116681 A
- US 20010011032 A1